Europäisches Patentamt

(19) European Patent Office

Office européen des brevets

(11) Numéro de publication : **0 070 800**
**B1**

(12) **FASCICULE DE BREVET EUROPÉEN**

(45) Date de publication du fascicule du brevet :
**26.03.86**

(51) Int. Cl.⁴ : **B 65 D 88/52**, B 65 D 88/30

(21) Numéro de dépôt : **82810292.1**

(22) Date de dépôt : **08.07.82**

(54) **Conteneur.**

(30) Priorité : **20.07.81 FR 8114107**

(43) Date de publication de la demande :
**26.01.83 Bulletin 83/04**

(45) Mention de la délivrance du brevet :
**26.03.86 Bulletin 86/13**

(84) Etats contractants désignés :
**AT BE CH DE FR GB IT LI LU NL SE**

(56) Documents cités :
**AU-A- 29 113**
**CH-A- 476 622**
**FR-A- 981 393**
**FR-A- 1 394 873**
**GB-A- 1 171 654**
**US-A- 3 040 925**

(73) Titulaire : **SCC Six-In-One Containers Company SA**
**2, rue Charles-Bonnet**
**CH-1206 Genève (CH)**

(72) Inventeur : **Goutille, Maurice**
**116, 5e avenue - Le Lys**
**F-60260 Lamorlaye (FR)**

(74) Mandataire : **Kirker, Gaylord Emile et al**
**c/o KIRKER & Cie S.A. 14, Rue du Mont-Blanc Case**
**postale 872**
**CH-1211 Genève 1 (CH)**

Jouve, 18, rue St-Denis, 75001 Paris, France

## Description

La présente invention a pour objet un conteneur de grande capacité destiné au transport terrestre, maritime et aérien.

On connaît bien le mode de transport par conteneurs dont plusieurs millions d'unités sillonnent le monde. Ils ont l'avantage de permettre l'acheminement direct des marchandises sans rupture de charge.

Les conteneurs sont en général normalisés et correspondent aux spécifications ISO (International Standard Organisation). Ils sont d'ordinaire manutentionnés verticalement par préhension sur les quatre coins supérieurs dénommés pièces de coin. Les conteneurs sont normalisés aux dimensions suivantes :

longueur : 6 096 mm (20 pieds), 9 144 mm (30 pieds) et 12 192 mm (40 pieds).

largeur : 2 438 mm (8 pieds).

hauteur : 2 438 mm (8 pieds) et 2 590,8 mm (8 pieds 6 pouces).

Toutefois, en raison du fait des nombreux trafics et déséquilibres, le retour des conteneurs vides est un problème important en même temps qu'une lourde charge financière. Il a déjà été tenté d'éliminer cet inconvénient en articulant les parois latérales sur le fond, de manière à permettre de rabattre ces parois en position parallèle au fond lors du retour à vide, réduisant ainsi l'encombrement lors de tels retours (voir par exemple les brevets français 1 593 377 et FR-A-2 101 331, FR-A-2 308 556, ainsi que les brevets britanniques 2 039 850 et 1 171 654). Toutefois, en pratique, ces constructions articulées présentent un inconvénient majeur, surtout lors des transports maritimes : sous l'influence de l'air marin une oxydation rapide du métal de ces articulations les rend inopérantes.

On a aussi proposé de prévoir les parois latérales du conteneur fixées sur le fond de manière démontable (brevet USA 3 401 814), mais cette construction a l'inconvénient de nécessiter, outre le fond, les quatre parois latérales et le couvercle, quatre piliers d'angle (démontables aussi) sur lesquels viennent se fixer les parois latérales lorsque le conteneur est assemblé. Ces piliers sont une gêne lors du retour à vide car ils augmentent la hauteur de l'ensemble des pièces superposées après démontage et il faut les arrimer spécialement. De plus, il est difficile d'assurer que ces pièces d'angle donnent à l'ensemble une rigidité et une résistance suffisantes vu les efforts considérables auxquels les conteneurs sont soumis durant le transport à pleine charge, par exemple sous l'effet de l'arrêt et des accélérations et décélérations.

La présente invention vise à fournir un conteneur « tel que celui divulgué par le brevet britannique GB-A-2 039 850 » qui soit exempt des inconvénients signalés des conteneurs connus et qui permette le retour à vide avec un minimum d'encombrement. Le conteneur selon l'invention est conforme à la revendication 1.

Le dessin annexé représente à titre d'exemples une forme d'exécution du conteneur selon l'invention et une variante.

Figure 1 est une vue en perspective du conteneur assemblé.

Figure 2 est une vue en perspective éclatée du conteneur selon la fig. 1, lorsque ses éléments constitutifs sont démontés et superposés.

Figure 3 est une vue en coupe verticale longitudinale du conteneur selon figure 1.

Figure 4 est une vue en coupe horizontale partielle d'un des angles du conteneur selon fig. 1.

Figure 5 est une vue en coupe partielle montrant les moyens d'accouplement des parois latérales avec le socle plancher.

Figure 6 est une vue de détail montrant des moyens d'accrochage pour relier entre eux des conteneurs démontés et compactés, pour former des blocs de plusieurs conteneurs.

Figure 7 est une vue de face de la paroi arrière ouvrante.

Figure 8 est une vue de détail en coupe selon 8-8 de fig. 7.

Figure 9 est une autre vue de détail en coupe selon 9-9 de fig. 7.

Figure 10 est une vue de détail en perspective, montrant les moyens de solidarisation de la paroi avant avec le socle plancher.

Figure 11 est une vue latérale montrant dans sa partie gauche la moitié du conteneur assemblé et, dans sa partie droite, la moitié d'un bloc de six conteneurs démontés, compactés et accrochés ensemble pour former un bloc de mêmes dimensions que le conteneur assemblé.

Les figures 12 et 13 se rapportent à une variante.

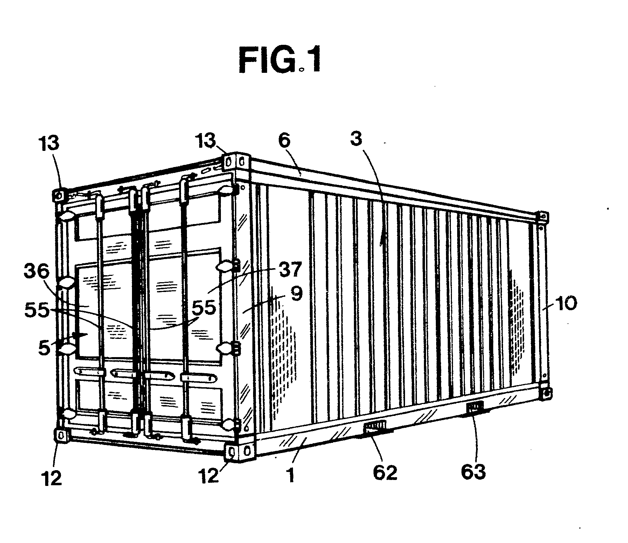

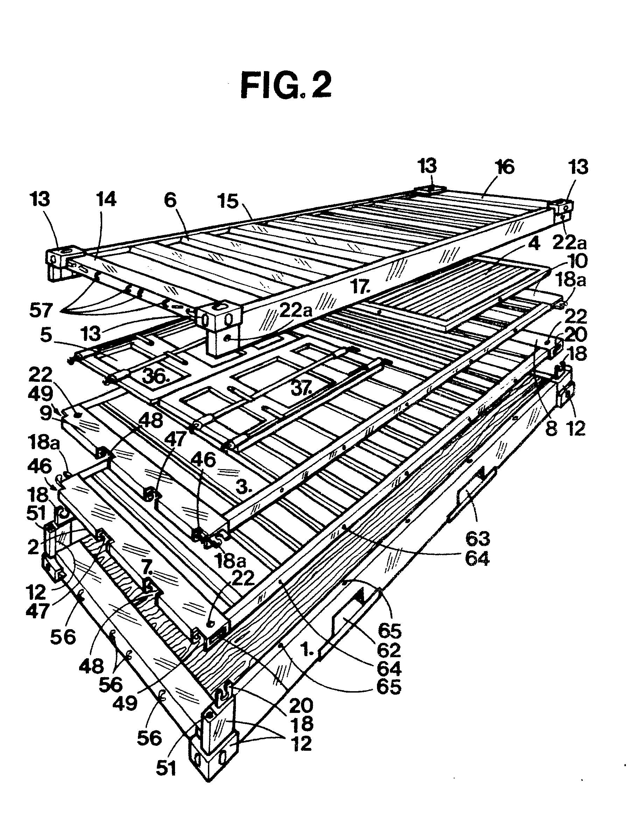

Le conteneur représenté sur les figures 1 et 2 est de grandeur normalisée. Il comprend un socle plancher 1, deux parois latérales 2 et 3, une paroi avant 4 qui n'est pas visible sur la figure 1, une paroi arrière ouvrante 5 et un toit 6.

La figure 1 montre ces différents éléments assemblés et la figure 2 ces mêmes éléments démontés et dans la position qu'ils occupent lorsqu'on les superpose pour former un ensemble compact, la distance des différents éléments étant exagérée pour la clarté du dessin.

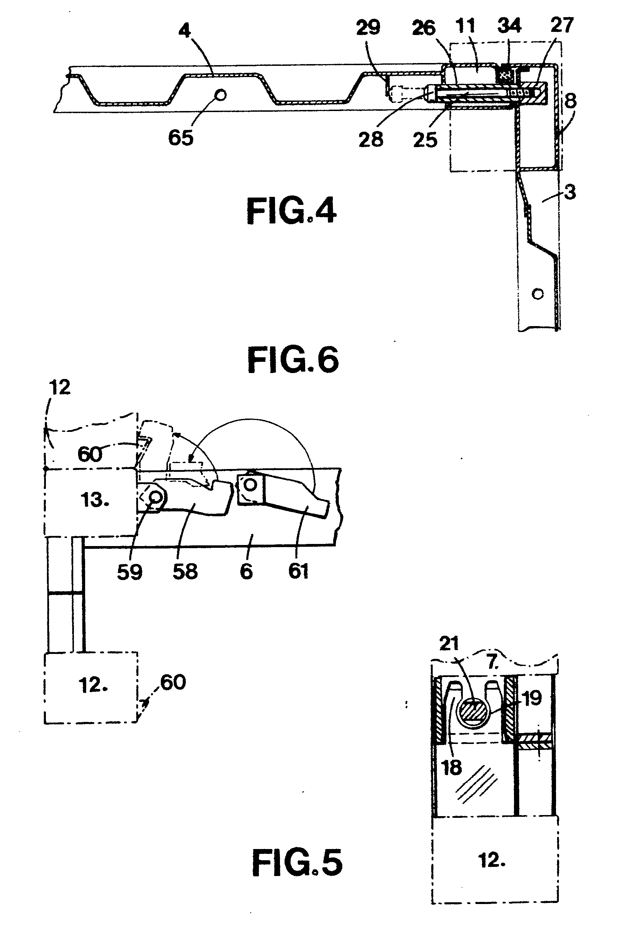

Les parois latérales, la paroi avant et le toit sont de forme ondulée comme il est bien connu, pour augmenter leur rigidité. La paroi latérale 2 présente à l'une de ses extrémités un renforcement 7 et à l'autre extrémité un renforcement identique 8 formé de deux montants, comme on le verra plus loin. De même, la paroi latérale 3 présente à l'une de ses extrémités un renforcement 9 et à l'extrémité opposée un renforcement identique 10 formé de deux montants. La paroi avant 4 présente elle aussi à ses deux extrémités un renforcement dont un seul est visible en 11 sur la figure 4.

Le socle plancher 1 présente à ses quatre angles des pièces de coin du type employé dans les conteneurs connus et qui sont représentées en 12.

De même, le toit 6 présente à ses quatre angles une pièce de coin analogue 13. Ces pièces de coin sont de dimensions standard (178 × 151 × 110 mm) et présentent des ouvertures normalisées sur toutes leurs faces apparentes. Ces ouvertures peuvent servir à diverses fonctions : préhension par des engins de manutention au moyen de verrous pivotants, arrimage avec un autre conteneur, fixation sur un châssis porteur par un moyen appelé communément Twys lock, jonction de deux conteneurs côte-à-côte ou bout-à-bout, manutention au moyen de palonniers équipés d'élingues.

Le toit 6 présente le long de ses quatre côtés un renforcement 14, 15, 16, 17.

Il est disposé sur chacune des pièces de coin 12 un organe 18 servant à l'accouplement d'une paroi latérale à ce socle. Cet organe 18 a la forme générale d'une fourche présentant une partie découpée circulaire 19 d'un diamètre supérieur à la distance existant entre les extrémités des branches de la fourche, comme on le voit sur la figure 5.

A la base de chacun des montants 7, 8, 9, 10, il est prévu une ouverture 20 destinée à s'engager chacune sur l'un des organes 18. Il est disposé à l'intérieur de chacun des montants un organe d'accouplement 21 ayant en coupe, comme on le voit sur la figure 5, la forme d'un cylindre dans lequel on a découpé deux méplats parallèles. Le diamètre de l'organe 21 est très légèrement inférieur au diamètre de la partie 19 et il est prévu dans chacun des montants 7-10 un trou 22 dans lequel on peut engager une clé pour faire tourner l'organe 21 d'un quart de tour. Dans la position représentée sur la figure 5, l'organe 21 s'oppose à ce que l'organe 18 cesse de coopérer avec lui sous l'effet d'un effort dirigé vers le haut et exercé sur la paroi latérale. Lorsque l'organe 21 est tourné d'un quart de tour, il peut passer librement entre les branches de la fourche lorsqu'on déplace verticalement la paroi latérale par rapport au socle 1. On comprend donc que pour assembler une paroi latérale avec ce socle, il suffit d'amener l'organe 21 dans la position où l'on peut enfiler chacune des branches 18 sur un de ces organes, après quoi on immobilise la paroi sur le socle en amenant chacune des pièces 21 dans la position représentée sur la figure 5.

Il est prévu à l'intérieur, sur le côté intérieur des parois latérales 2 et 3 un organe de sécurité 23 constitué, dans cet exemple, par un verrou pivotant 24 que l'on vient engager contre une partie plane de l'organe 21 lorsqu'il est en position d'assemblage. Dès lors, l'actionnement de cet organe de l'extérieur du conteneur au moyen d'une clé que l'on engage dans le trou 22 n'est plus possible. Ceci est important du point de vue de l'inviolabilité du conteneur et aussi pour éviter qu'une paroi latérale se détache accidentellement du socle. Les moyens que l'on vient de décrire pour assembler les parois latérales au socle se retrouvent identiquement à la partie supérieure du conteneur, en ce sens qu'à la partie supérieure de chacun des montants 7, 8, 9, 10, ces montants portent une pièce 18a identique à 18, tandis que chacune des pièces de coin 13 du toit présente à son intérieur un organe 21a identique à 21, actionnable de l'extérieur au moyen d'une clé que l'on engage dans un trou 22a. Ces moyens identiques à ce qui est représenté sur la fig. 5 servent à accoupler les parois latérales 2, 3, au toit 6. Un moyen de sécurité 23a, 24a, identique à 23, 24 est également prévu pour empêcher un actionnement de l'organe 21a à partir de l'extérieur, lorsque le toit et les parois latérales sont assemblés.

La paroi avant 4 est fixée de façon amovible au socle 1, au toit 6 et aux parois latérales 2 et 3 par des moyens que l'on va décrire maintenant.

Sur la fig. 4, on voit les moyens de fixation du fond 4 à la paroi 3. Ils consistent en une vis 25 pouvant coulisser dans un tube 26 solidaire du montant 11 et destinée à venir s'engager dans un trou fileté d'une pièce 27 solidaire du montant 8. Une pièce 29 solidaire du fond 4 limite la course de la vis 25 en l'empêchant de sortir du tube 26.

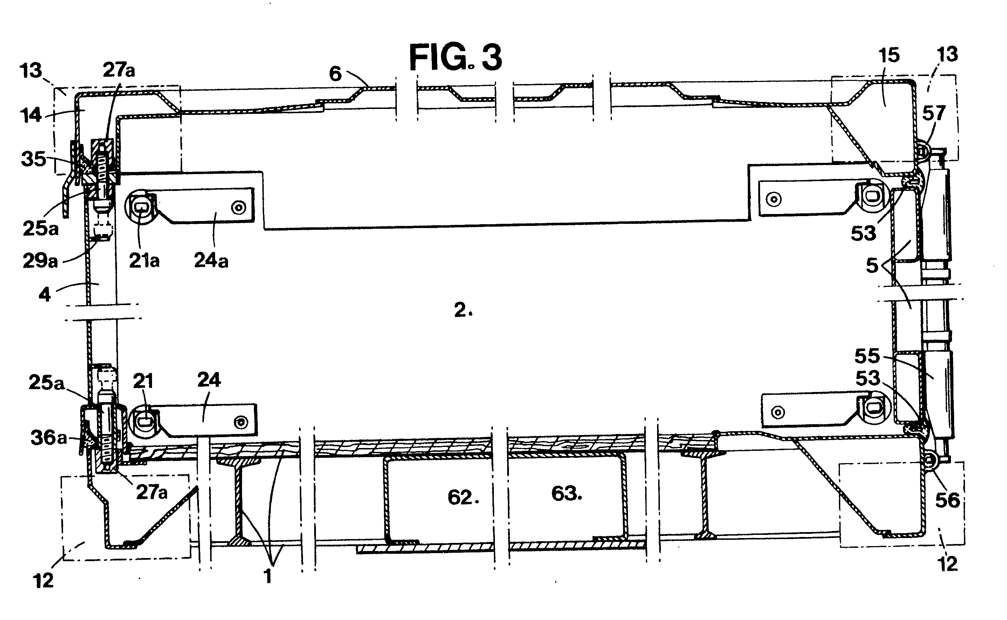

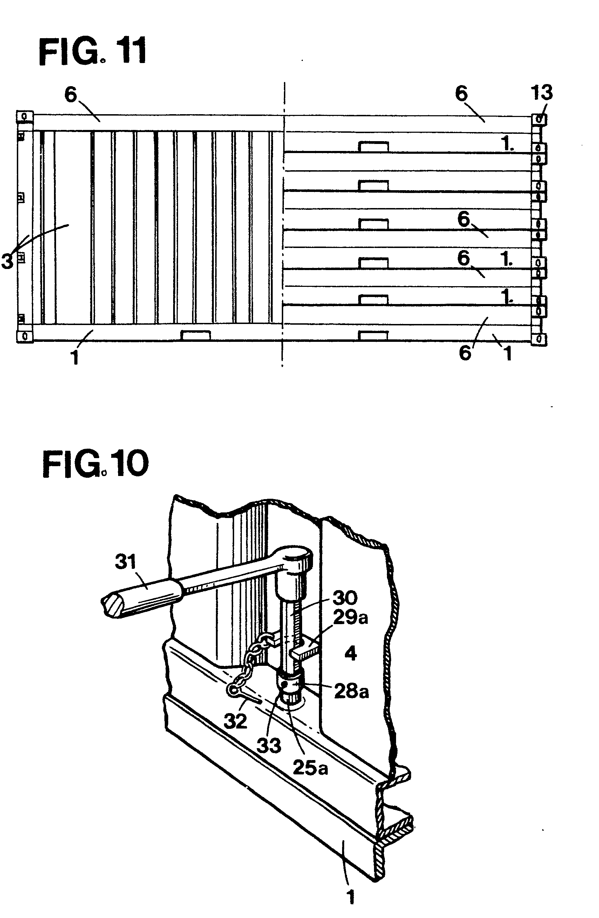

Les moyens décrits en référence à la fig. 4 pour fixer le fond 4 à la paroi latérale 3 se retrouvent sur les figures 3 et 10 où l'on voit de tels moyens servant à fixer le fond 4 d'une part au socle 1 et, d'autre part, au plafond 3.

Dans les deux cas, l'actionnement des vis 25, 25a a lieu comme montré sur la fig. 10. La tête 28, 28a de la vis présente un trou à six pans dans lequel on engage une clé 30 à six pans munie d'un bras 31. Cette clé passe à travers une ouverture d'une plaque 29, 29a solidaire de la paroi 4 et empêchant la vis 25, 25a de se dégager complètement. Une goupille 32 reliée à 29, 29a par une chaînette est destinée à être engagée dans un trou 33 de la tête 28, 28a pour immobiliser angulairement la vis lorsqu'elle est en position de travail, cette goupille étant assez longue pour buter contre la paroi 4.

Pour assurer l'étanchéité entre les parois latérales 2, 3 et le socle 1, on dispose entre ces parois et ce socle un joint qui est serré entre ces parois et ce socle, grâce à un mécanisme identique à celui représenté sur la figure 10, mais dont les vis passent à travers des trous visibles en 64 sur la fig. 2 pour ce qui est de la paroi et en 65 pour ce qui est du socle. Bien entendu, une disposition identique est prévue entre la paroi et le socle. De même, à la partie supérieure des parois 2 et 3 des mécanismes semblables permettent de serrer un joint entre ces parois et le toit 6.

Comme il est connu, des joints d'étanchéité visibles en 34, 35 sont prévus entre le fond 4 d'une part et les parois latérales, le socle et le plafond, d'autre part.

Il est à remarquer que les moyens de solidarisation de la paroi 4 avec les autres éléments sont disposés entièrement à l'intérieur du gabarit de l'épaisseur de cette paroi ondulée 4.

On va décrire maintenant la façon dont la paroi ouvrante 5 est constituée. Cette paroi est formée de deux vantaux 36, 37 montés pivotants l'un sur le montant 7 et l'autre sur le montant 9.

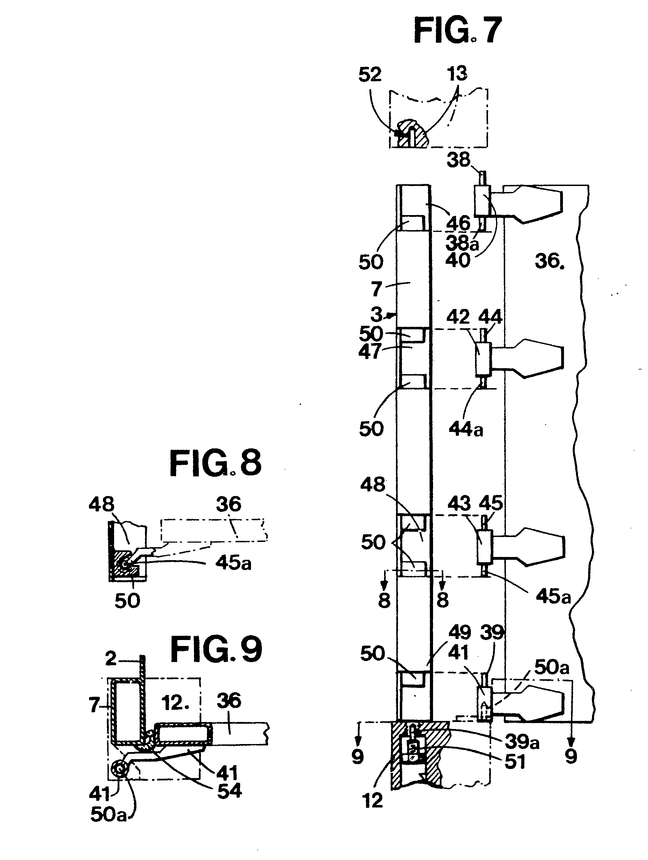

Le vantail 36 présente une paire de pivots supérieurs 38, 38a, et un pivot inférieur 39, portés respectivement par deux pièces 40, 41 de forme semi-cylindrique et solidaires de ce vantail. Entre ces pièces 40, 41, il est disposé deux autres pièces 42, 43, de même forme, fixées elles aussi au vantail 36 et pourvues de paires de pivots intermédiaires, coaxiaux avec les premiers et désignées par 44, 44a et 45, 45a sur la fig. 7.

Quatre évidements 46, 47, 48, 49 sont prévus dans le montant 7 pour recevoir respectivement les pivots 38-38a, 44-44a, 45-45a et 39. Des pièces identiques 50 sont soudées à l'intérieur de ces évidements, pour coopérer chacun avec l'un des pivots 38a, 39, 44-44a et 45-45a. Une seule pièce 50 est prévue dans l'évidement 46 pour coopérer avec le pivot 39. De même, une seule pièce 50 est prévue en 49, pour coopérer avec le pivot 39. La forme de ces pièces 50 est visible sur la figure 8, et lorsqu'il s'agit de fixer le vantail 36 au montant 7, on procède de la façon suivante. Le toit 6 n'étant pas encore en place, on amène le vantail de façon que les différents pivots soient chacun en face d'un des organes 50, comme le montre la fig. 7, le vantail étant au niveau qu'il doit occuper une fois en place sur le montant 7. On amène simultanément les pivots contre l'intérieur des organes respectifs 50 qui guide les pivots correspondants pendant qu'on agit sur le vantail de façon que chacun des pivots arrive dans la position représentée sur la figure 8, pour laquelle la pièce 43 se trouve dans une partie semi-cylindrique de la pièce 50 ayant un diamètre égal à celui des pivots. Ainsi, on est assuré que l'axe commun des pivots est en position correcte pour permettre la rotation du vantail. Il suffit pour terminer, de faire les deux opérations suivantes : d'abord, visser dans la pièce de coin 12, un boulon 51 dont l'extrémité forme un pivot 39a venant s'engager dans un trou crapaudine 50a de la pièce 41, trou coaxial avec les pivots susmentionnés. Ce boulon 51 est prisonnier dans la pièce de coin, entre une position où le pivot 39a est complètement effacé dans la pièce de coin, et une position où ce pivot est engagé dans le trou 50a. Ensuite, on laisse descendre le toit 6 de façon qu'un trou crapaudine 52 ménagé dans la pièce de coin 13 s'engage sur le pivot 38. Dès ce moment, le vantail peut tourner entre la position fermée visible sur les figures 1 et 9, et une position complètement ouverte qu'il atteint par une rotation de 3/4 de tour et qui amène le vantail à être appliqué contre la paroi 2. La mise en place du vantail 37 a lieu de même façon, la disposition étant parfaitement symétrique. Des organes d'étanchéité 53, 54 sont prévus pour assurer la fermeture étanche des vantaux.

Le maintien en position fermée des vantaux, avec la pression nécessaire sur les organes d'étanchéité 53, 54, est assuré par quatre barres 55 dont deux sont fixées de façon pivotante sur chacun des vantaux. Ces barres se terminent à leurs extrémités par des crochets destinés à coopérer avec des anneaux 56 solidaires du socle 1 (voir fig. 2) et les autres avec des anneaux identiques 57 solidaires du toit 6. Par rotation des barres 55 autour de leur axe propre, on amène les crochets à coopérer avec les anneaux 56, 57 et ces barres pressent alors le vantail respectif en position fermée.

Pour le retour à vide du conteneur représenté, on démonte ses éléments constitutifs et on les superpose sur le socle 1 dans l'ordre qu'indique la fig. 2, la paroi latérale 2 reposant sur ce socle, la paroi 3 sur la paroi 2, etc. et le toit 6 reposant à son tour par ses pièces de coin 13 sur les pièces de coin 12. Il est à remarquer que lorsque le toit repose ainsi sur le socle, les organes 18 du socle s'engagent dans les trous correspondants des pièces 13 et l'on peut alors, en introduisant une clé dans les trous 22a, amener l'organe 21 dans la position de travail visible sur la fig. 5. En principe, le toit vient s'accoupler au socle exactement comme lors du montage les parois latérales 2 et 3 sont venues s'accoupler sur ce socle.

Un espace juste suffisant est ménagé entre le toit 6 et le socle plancher 1 pour permettre d'y loger les deux parois latérales 2 et 3, la paroi avant 4 et les deux vantaux 36, 37, comme on l'imagine facilement en considérant la figure 2, si l'on suppose que les différents éléments représentés reposent les uns sur les autres.

Le conteneur est ainsi compacté avec ses différents éléments constitutifs à plat les uns sur les autres et il forme un bloc. Des blocs formés ainsi chacun d'un conteneur compacté peuvent être réunis ensemble, par exemple par groupe de six, grâce aux moyens suivants.

Le toit 6 de chaque conteneur prévoit des crochets 58 pivotant autour d'un axe 59 porté par une pièce de coin 13 (fig. 6). Ce crochet 58 peut être amené par rotation de 90° dans la position représentée en traits mixtes pour laquelle il coopère avec un nez 60 prévu sur la pièce de coin 12 d'un autre conteneur compacté. Un verrou 61 pivotant sur le toit 6 peut être amené dans la position indiquée en traits mixtes pour venir immobiliser le crochet 58 et empêcher son dégagement fortuit du nez 60. La fig. 11 montre, dans sa partie droite, six conteneurs compactés superposés et reliés ensemble pour former un bloc, comme il vient d'être décrit à propos de la fig. 6, occupant exactement, au jeu normal près, l'encombrement d'un conteneur monté en position de travail. Un bloc de six conteneurs ainsi assemblé peut être manœuvré facilement au moyen d'une grue ou de tout autre mécanisme porteur venant coopérer avec des trous des pièces de coin 13 du conteneur supérieur. Rien n'empêche, d'ailleurs, de réunir entre eux de même façon plusieurs blocs de six conteneurs superposés.

Il est à remarquer que le conteneur décrit présente notamment les avantages suivants.

Lors du démontage des différentes parties constitutives, il n'existe aucune pièce détachable. Il suffit de manœuvrer le socle, les parois latérales, la paroi de fond, les vantaux et le plafond, aucune vis ou autre moyen de fixation ne se détachant de ces éléments et ne risquant de se perdre. Le compactage des éléments de chaque conteneur permet de réduire dans la proportion de 6 à 1 le volume du conteneur lors d'un retour à vide, ce qui représente une économie du prix de transport considérable. Lorsque le conteneur est assemblé en position de travail, son intérieur est exempt de toute partie en saillie pouvant gêner la mise en place des charges dans le conteneur. Le socle plancher est dépourvu de différences de niveau, si bien que les charges peuvent être amenées et roulées ou glissées sur le socle sans aucune difficulté. On peut naturellement prévoir, comme il est connu, dans le plancher des anneaux pivotants disposés dans des alvéoles et qui permettent d'arrimer des citernes en matériel flexible ou non. Bien entendu, des joints d'étanchéité sont prévus entre les bords du socle 1 et le bord inférieur des parois 2 et 3 et, de même, entre les bords inférieurs du plafond 6 et de ces mêmes parois latérales. On voit en 62, 63 des ouvertures de fourches ménagées dans le socle 1 pour permettre éventuellement la manutention à l'aide d'engins à fourche.

On a expliqué plus haut que les parois latérales 2, 3, ainsi que le socle 1 et le toit 6, sont reliés à la paroi avant 4 par des moyens d'accouplement à vis (fig. 3 et 4) et que de tels moyens à vis sont aussi utilisés pour fixer les parois latérales au socle et au toit, en différents endroits de leur longueur, avec interposition de joints d'étanchéité (fig. 10).

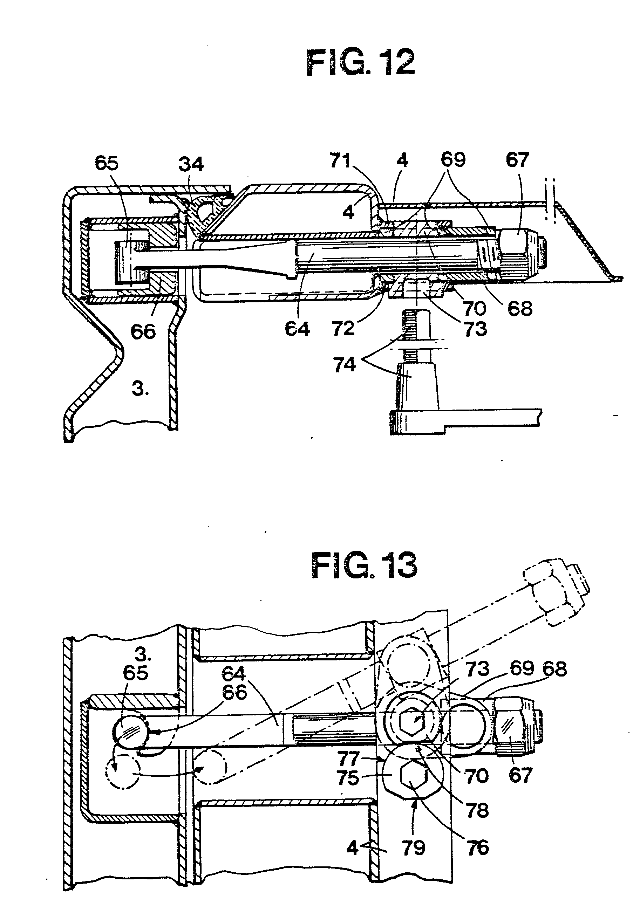

Dans la variante selon fig. 12 et 13 on a montré comment ces moyens d'accouplement à vis peuvent être remplacés avantageusement par des moyens d'accouplement à genouillère. Pour simplifier, on a représenté qu'un seul de ces moyens, qui sert, comme dans le cas de la fig. 4, à relier de façon démontable, l'une des parois latérales (3) au fond 4.

Ces moyens d'accouplement comprennent une genouillère constituée par une barre 64 présentant à l'une de ses extrémités une partie cylindrique 65 destinée à coopérer avec un siège 66 solidaire de la paroi 3. A son extrémité opposée, la barre 64 est filetée et munie d'un écrou 67. La barre 64 passe avec jeu dans un guide cylindrique 68 dans lequel elle peut coulisser. Ce guide est agencé pour pivoter sur l'une des extrémités d'un levier 69 solidaire à son autre extrémité d'un pivot 70 monté pour pouvoir pivoter dans des parties 71, 72 solidaires du fond 4. Le pivot 70 présente à son extrémité visible de l'intérieur du conteneur assemblé, un trou hexagonal 73 dans lequel on peut engager l'extrémité d'une clé 74 à six-pans, pour le faire pivoter dans 71, 72.

Dans la position de travail de ces moyens d'accouplement, représentée en traits pleins sur les fig. 12 et 13, la partie cylindrique 65 est en prise avec le siège 66 et l'écrou 67 appuie sur l'extrémité du guide 68. Le mécanisme à genouillère, retient alors fermement ensemble la paroi 3 et le fond 4. Si maintenant on veut libérer le mécanisme et amener la barre 64 dans la position représentée en traits mixtes, où la partie cylindrique 65 est dégagée du siège 66, il suffit de faire tourner d'un quart de tour le levier 69, au moyen de la clé 74, pour l'amener dans la position représentée en trait mixte sur la fig. 13. Il est à remarquer que, pour permettre ce mouvement, l'axe du pivot 70 est légèrement décalé par rapport à l'axe de la barre 64, comme on le voit sur la fig. 13. Pour empêcher tout dégagement fortuit du cylindre 65 lorsqu'il est en prise avec le siège 66, les moyens de sécurité suivants sont prévus. Un verrou 75 monté tournant sur le fond 4, au voisinage du pivot 70 présente un trou hexagonal 76, identique à 73 et destiné lui aussi à recevoir la clé 74 pour le faire tourner. Ce verrou présente une partie cylindrique 77 qui, dans la position représentée sur la fig. 13, fait contact avec une entaille 78 du pivot 70 ayant la forme d'un plat se prolongeant par une portion de cylindre de même rayon que la partie 77. Dans la position représentée, le verrou 75 empêche toute rotation du pivot 70 et du levier 69. Si l'on fait tourner le verrou 75 d'un demi-tour dans le sens des aiguilles de la montre, c'est une partie découpée 79 de la périphérie de ce verrou qui vient en regard de l'entaille 78, ce qui libère le pivot 70 et le levier 69 que l'on peut alors amener dans la position indiquée en trait mixte sur la fig. 13. En ramenant le verrou dans la position représentée, après avoir remis le mécanisme à genouillère en position de travail, on verrouille à nouveau ce mécanisme.

## Revendications

1. Conteneur comprenant deux parois latérales (2, 3) présentant chacune des moyens pour les accoupler, d'une part, avec un socle plancher (1) et, d'autre part, avec un toit détachable (6), ainsi qu'un renforcement (7, 8, 9, 10) formant montant à chacune de leurs extrémités, une paroi avant (4), une paroi arrière (5) ouvrable, à deux vantaux (36, 37), le socle plancher (1) et le toit détachable (6) présentant des moyens (12, 13, 18, 19, 20, 21, 22, 22a) leur permettant d'être accouplés soit chacun avec les parois latérales (2, 3), lors du montage du conteneur, soit directement entre eux après démontage du conteneur lors de son voyage à vide, de manière à maintenir entre eux, dans un espace réduit et de manière compacte, les quatre parois (2, 3, 4, 5) superposées, caractérisé en ce que les quatre parois (2, 3, 4, 5) constituent chacune un élément séparé assemblable et détachable, la paroi avant (4) présente en outre des moyens (25a, 27a) lui permettant d'être accouplée, d'une part, avec le socle plancher (1) et, d'autre part, avec le toit (6), ainsi qu'un renforcement (11) formant montant à chacune de ses extrémités, avec, par ces renforcements (11), des moyens (25, 27) permettant à la paroi avant (4) d'être solidarisée avec les parois latérales (2, 3), et en ce que les deux vantaux (36, 37) sont montés à pivot, chacun sur un des renforcements (7, 9) de chacune des parois latérales (2, 3).

2. Conteneur selon la revendication 1, dont les parois latérales (2, 3) et avant (4) sont ondulées, caractérisé en ce que les renforcements (7, 8, 9, 10) des parois latérales (2, 3) sont d'une épaisseur comprise dans le gabarit de l'épaisseur desdites parois (2, 3, 4), et en ce que les moyens d'accouplement (18-21) du socle plancher (1) et du toit (6) avec les parois latérales (2, 3) et les moyens de solidarisation (25, 27) des deux parois latérales (2, 3) avec la paroi avant (4), sont aussi disposés à l'intérieur de ce gabarit, pour que l'intérieur et l'extérieur du conteneur soient exempts de saillies hors de ce gabarit.

3. Conteneur selon la revendication 1 ou 2, caractérisé en ce que les moyens susdits d'accouplement (18-21) des parois latérales (2, 3) au socle plancher (1) et au toit (6) comportent une partie (18, 21) disposée dans des pièces de coin (12, 13) solidaires du socle plancher (1), respectivement du toit (6), et une partie disposée dans chacun des montants (7, 8, 9, 10) des parois latérales (2, 3), ces pièces de coin (12, 13) et ces montants (7-10) se faisant face dans le conteneur assemblé.

4. Conteneur selon la revendication 1 ou 2, caractérisé en ce que les moyens d'accouplement susdits (18, 21) du socle plancher (1) et du toit (6) avec les parois latérales (2, 3) présentent un organe d'actionnement (21) accessible et manœuvrable de l'extérieur du conteneur, et en ce qu'il présente un organe de sécurité (23, 24), pour bloquer l'organe d'actionnement (21) en position active, cet organe de sécurité (23, 24) étant accessible et manœuvrable seulement de l'intérieur du conteneur, pour assurer l'inviolabilité du conteneur en empêchant de produire le désaccouplement tant que ces moyens de sécurité (23, 24) sont en position active.

5. Conteneur selon la revendication 1, caractérisé en ce que le socle plancher (1) et le toit (6) présentent en outre des moyens d'accrochage (58, 59, 60) pour relier entre eux plusieurs conteneurs démontés et compactés, pour former un bloc de plusieurs tels conteneurs.

6. Conteneur selon les revendications 1 et 5, caractérisé en ce que la hauteur du socle plancher (1) plus celle du toit (6), qui représente la hauteur du conteneur démonté et compacté, est égale, au jeu normal près, à un sixième de la hauteur du conteneur assemblé, un bloc de six conteneurs compactés, accrochés entre eux, ayant ainsi le volume d'un seul conteneur assemblé.

7. Conteneur selon la revendication 1 ou 2, caractérisé en ce que les deux vantaux (36, 37) sont articulés chacun sur un des montants (7-10) des parois latérales (2, 3) de façon détachable et pour tourner de trois quarts de tour.

8. Conteneur selon les revendications 1 et 2, caractérisé en ce que les moyens de solidarisation (25, 27) susdits sont disposés d'une part sur la face intérieure des parois (2, 3) latérales, et, d'autre part, à l'intérieur d'une onde de la paroi avant (4) et entièrement dans le gabarit de l'épaisseur de ces parois (2, 3, 4).

9. Conteneur selon la revendication 1 ou 8, caractérisé en ce que les moyens de solidarisation susdits sont constitués par un mécanisme à genouillère (64-73) muni d'un moyen de blocage (75-79), et en ce que des moyens de solidarisation identiques sont prévus pour relier de façon démontable, les parois latérales (2, 3) au socle plancher (1) d'une part, et au toit (6) d'autre part, en plusieurs endroits de leur longueur.

**Claims**

1. Container comprising two side walls (2, 3), each having means for coupling them on the one hand with a base (1) and on the other hand with a detachable roof (6) as well as a reinforcement (7, 8, 9, 10) forming a pillar at each of their two ends, a front wall (4), a back wall (5) comprised of two doors capable of being opened (36, 37), the base (1) and the detachable roof (6) having means (12, 13, 18, 19, 20, 22, 22a) for enabling them to be coupled either each with the side walls (2, 3) during the assembling of the container, or directly between themselves after the dismounting of the container when the latter travels empty so as to maintain between them in a reduced space and in a compact way the four panels (2, 3, 4, 5) superposed, characterized in that the four walls (2, 3, 4, 5) constitute each a separate element which can be assembled and detached, the front wall (4) further having means (25a, 27a) which enable it to be coupled on the one hand with the base (1) and on the other hand with the roof (6) as well as a reinforcement (11) forming a pillar at each of its ends with means for enabling the front wall (4) to be fastened through the reinforcements (11) to the side walls (2, 3), and in that the two doors (36, 37) are pivotally mounted each on one of the reinforcements (7, 9) of each of the side walls (2, 3).

2. Container according to claim 1 and in which the side (2, 3) and front (4) walls are corrugated, the roof (6) with the side walls (2, 3) and the fastening means (25, 27) of the side walls (2, 3) with the front wall (4), are also arranged in said gauge, in order that the inside and the outside of the container be free of protrusions out of said gauge.

3. Container according to claim 1 or 2, characterized in that the said coupling means (18-21) of the side walls (2, 3) with the base (1) and the roof (6) comprise a part (18, 21) arranged in corner components (12, 13) integral with the base (1), respectively with the roof (6), and a part arranged in each of the pillars (7, 8, 9, 10) of the side walls, said corner components (12, 13) and said pillars (7-10) being face to face in the assembled container.

4. Container according to claim 1 or 2, characterized in that the said coupling means (18, 21) of the base (1) and of the roof (6) with the side walls (2, 3) are provided with and actuating member (21) accessible and manageable from outside the container, and in that it comprises a safety member (23, 24), for blocking the actuating member (21) in operating position, said safety member (23, 24) being accessible and manageable only from inside the container, for ensuring the inviolability of the container by preventing to produce the de-coupling so long as said safety means (23, 24) are in operating position.

5. Container according to claim 1, characterized in that the base (1) and the roof (6) are provided in addition with hooking means (58, 59, 60) for connecting together several containers disassembled and compacted, for thus forming a block of several such containers.

6. Container according to claims 1 and 5, characterized in that the height of the base (1) added to the height of the roof (6), which is the total height of a disassembled and compacted container, amounts to one sixth approximately of the height of the assembled container, a block of six compacted containers, hooked together, having thus the volume of a single assembled container.

7. Container according to claim 1 or 2, characterized in that the two doors (36, 37) are pivoted detachably each on one of the pillars (7-10) of the side walls (23) for rotating by three quarters of a circle.

8. Container according to claims 1 and 2, characterized in that said fastening means (25, 27) are arranged on the one hand on the inside face of the side walls (2, 3), and on the other hand within an ondulation of the front door (4) and entirely within the gauge of the thickness of these walls (2, 3, 4).

9. Container according to claim 1 or 8, characterized in that the said fastening means are an articulated mechanism (64-73) provided with a blocking means (75-79), and in that identical fastening means are provided for connecting in a disassemblable way the side walls (2, 3) to the base (1) on the one hand, and to the roof (6) on the other hand, in several places of their length.

**Patentansprüche**

1. Container mit zwei Seitenwänden (2, 3), von welchen jede Mittel, um sich einerseits an eine Bodenunterlage (1) und andererseits an ein wegnehmbares Dach (6) anzukuppeln sowie an jedem ihrer Enden eine einen Pfosten bildende Verstärkung (7, 8, 9, 10) aufweist, mit einer Vorderwand (4) und mit einer sich mit zwei Flügeln (36, 37) öffnenden Rückwand (5), wobei die Bodenunterlage (1) und das wegnehmbare Dach (6) Mittel (12, 13, 18, 19, 20, 21, 22, 22a) aufweisen, mit welchen die Bodenunterlage und das Dach entweder während des Zusammenbaues des Containers an die Seitenwände (2, 3) angekuppelt werden können oder nach der Zerlegung des Containers und während seiner Leerreise direkt zusammengekuppelt werden können, in der Weise, dass zwischen ihnen die vier Wände (2, 3, 4, 5), überlagert in einem reduzierten Raum zusammengedrängt, festgehalten werden, dadurch gekennzeichnet, dass jede der vier Wände (2, 3, 4, 5) ein getrenntes, zusammenbaubares und wegnehmbares Element bildet, dass die Vorderwand (4) zusätzlich Mittel (25a, 27a), mit denen sie einerseits an die Bodenunterlage (1) und andererseits an das Dach (6) angekuppelt werden kann, sowie an jedem ihrer Enden eine einen Pfosten bildende Verstärkung (11) aufweist, welche Mittel (25, 27), um die Vorderwand (4) mit den Seitenwänden (2, 3) zu verbinden, besitzt, und dass jeder der beiden Flügel (36, 37) über Drehzapfen an einer der Verstärkungen (7, 9) der jeweiligen Seitenwand (2, 3) befestigt ist.

2. Container gemäss Anspruch 1, dessen Seitenwände (2, 3) und dessen Vorderwand (4) gewellt sind, dadurch gekennzeichnet, dass die Verstärkungen (7, 8, 9, 10) der Seitenwände (2, 3) eine Dicke aufweisen, die im Profil der gewellten Wände (2, 3, 4) enthalten ist, und dass die Mittel (18-21) der Bodenunterlage (1) und des Dachs (6), um sie an die Seitenwände (2, 3) anzukuppeln, und die Mittel (25, 27) der beiden Seitenwände (2, 3), um sie mit der Vorderwand (4) zu verbinden, auch innerhalb des besagten Profils angeordnet sind, damit das Innere und das Äussere des Containers nichts vorstehendes ausserhalb dieses Profils aufweisen.

3. Container gemäss Anspruch 1 oder 2, dadurch gekennzeichnet, dass die Mittel (18-21) der Seitenwände (2, 3), um sie an die Bodenunterlage (1) und an das Dach (6) anzukuppeln, einen Teil (18, 21) aufweisen, der in mit der Bodenunterlage (1), beziehungsweise mit dem Dach (6) festverbundenen Eckteilen (12, 13) angeordnet ist und einen weiteren Teil aufweisen, der in jedem der Pfosten (7, 8, 9, 10) der Seitenwände (2, 3) angeordnet ist, wobei diese Eckteile (12, 13) und diese Pfosten (7-10) sich im montierten Container gegenüberstehen.

4. Container gemäss Anspruch 1 oder 2, dadurch gekennzeichnet, dass die besagten Mittel (18, 21), um die Bodenunterlage (1) und das Dach (6) an die Seitenwände (2, 3) anzukuppeln, ein von ausserhalb des Containers zugängliches und betätigbares Betätigungsmittel (21) aufweisen und dass er eine Sicherheitsvorrichtung (23, 24) aufweist, um das Betätigungsmittel (21) in aktiver Stellung zu blockieren, wobei die Sicherheitsvorrichtung (23, 24) nur vom Inneren des Containers zugänglich und betätigbar ist, damit die Unverletzlichkeit des Containers durch Verhinderung der Entkupplung, solange die Sicherheitsvorrichtung (23, 24) eingeschaltet ist, gewährleistet ist.

5. Container gemäss Anspruch 1, dadurch gekennzeichnet, dass die Bodenunterlage (1) und das Dach (6) zusätzlich Anhängemittel (58, 59, 60) aufweisen, um unter sich verschiedene, zerlegte und zusammengedrängte Container zu verbinden, um daraus eine Einheit zu bilden.

6. Container gemäss den Ansprüchen 1 und 5, dadurch gekennzeichnet, dass zusammen die Höhe der Bodenunterlage (1) und die Höhe des Daches (6), welche die Höhe des zerlegten und zusammengedrängten Containers ausmachen, unter Berücksichtigung eines passenden Spiels einem Sechstel der Höhe des zusammengebauten Containers entsprechen, womit eine Einheit aus sechs zerlegten, zusammengedrängten und zusammengehängten Containern den Rauminhalt eines einzigen zusammengesetzten Containers aufweist.

7. Container gemäss Anspruch 1 oder 2, dadurch gekennzeichnet, dass jeder der beiden Flügel (36, 37) auf einem jeweiligen Pfosten (7-10) der Seitenwände (2, 3) wegnehmbar und schwenkbar für eine 270° Drehung befestigt ist.

8. Container gemäss den Ansprüchen 1 und 2, dadurch gekennzeichnet, dass die genannten Verbindungsmittel (25, 27) einerseits auf der Innenseite der Seitenwände (2, 3) und andererseits im Inneren einer Wellung der Vorderseite (4) und vollständig innerhalb des durch die Dicke dieser Wände (2, 3, 4) gegebenen Profils angeordnet sind.

9. Container gemäss Anspruch 1 oder 8, dadurch gekennzeichnet, dass die genannten Verbindungsmittel eine mit einer Verriegelung (75-79) versehene Kniehebelvorrichtung (64-73) aufweisen, und dass identische Verbindungsmittel, um die Seitenwände (2, 3) einerseits an die Bodenunterlage (1) und andererseits an das Dach (6) an verschiedenen Stellen entlang ihrer Länge trennbar zu verbinden, vorgesehen sind.

# FIG.1

# FIG. 2

# FIG. 3

0 070 800

**FIG.4**

**FIG.6**

**FIG.5**

# FIG. 7

# FIG. 8

# FIG. 9

# FIG. 11

# FIG. 10

# FIG. 12

# FIG. 13